(19) Europäisches Patentamt / European Patent Office / Office européen des brevets

(11) **EP 3 228 131 B1**

(12) **EUROPEAN PATENT SPECIFICATION**

(45) Date of publication and mention
of the grant of the patent:
**05.02.2020  Bulletin 2020/06**

(21) Application number: **14907421.3**

(22) Date of filing: **01.12.2014**

(51) Int Cl.:
*H04W 52/24* (2009.01)    *H04W 52/14* (2009.01)
*H04W 52/40* (2009.01)

(86) International application number:
**PCT/SE2014/051429**

(87) International publication number:
**WO 2016/089259 (09.06.2016 Gazette 2016/23)**

(54) **METHOD AND NETWORK NODE FOR MANAGING TRANSMIT POWER OF A WIRELESS DEVICE**

VERFAHREN UND NETZWERKVORRICHTUNG ZUR VERWALTUNG DER
ÜBERTRAGUNGSLEISTUNG EINER DRAHTLOSEN VORRICHTUNG

PROCÉDÉ ET NOEUD DE RÉSEAU POUR GÉRER UNE PUISSANCE DE TRANSMISSION D'UN
DISPOSITIF SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.10.2017  Bulletin 2017/41**

(73) Proprietor: **Telefonaktiebolaget LM Ericsson
(publ)
164 83 Stockholm (SE)**

(72) Inventors:
• **ZHANG, Zhang**
  **S-100028 Beijing (SE)**
• **CHRISTOFFERSSON, Jan**
  **S-975 96 Luleå (SE)**

(74) Representative: **Zacco Sweden AB
Valhallavägen 117
Box 5581
114 85 Stockholm (SE)**

(56) References cited:
WO-A1-2014/070093    WO-A1-2014/070093
WO-A1-2014/182236    WO-A2-2009/061261

• ERICSSON ET AL: "Robust UL Control Channel
Reception for Heterogeneous Networks", 3GPP
DRAFT; R1-130621 ROBUST UL CONTROL
CHANNEL RECEPTION FOR HETEROGENEOUS
NETWORKS, 3RD GENERATION PARTNERSHIP
PROJECT (3GPP), MOBILE COMPETENCE
CENTRE ; 650, ROUTE DES LUCIOLES ; F-06921
SOPHIA-ANT , vol. RAN WG1, no. St Julian;
20130128 - 20130201 19 January 2013
(2013-01-19), XP050663873, Retrieved from the
Internet:
URL:http://www.3gpp.org/ftp/tsg_ran/WG1_RL
1/TSGR1_72/Docs/ [retrieved on 2013-01-19]
• ERICSSON: 'Robust UL Control Channel
Reception for Heterogeneous Networks;' 3GPP
DRAFT; R1-130621 ROBUST UL CONTROL
CHANNEL RECEPTION FOR HETEROGENEOUS
NETWORKS, 19 January 2013, XP050663873

## Description

### TECHNICAL FIELD

Embodiments herein relate to a method and a network node in a wireless communication network, e.g. telecommunication network, for managing transmit power of a wireless device in the wireless communication network.

### BACKGROUND

Communication devices such as wireless devices may also be known as e.g. user equipments (UEs), mobile terminals, wireless terminals and/or mobile stations. A wireless device is enabled to communicate wirelessly in a cellular communication network, wireless communication system, or radio communication system, sometimes also referred to as a cellular radio system, cellular network or cellular communication system. The communication may be performed e.g. between two wireless devices, between a wireless device and a regular telephone and/or between a wireless device and a server via a Radio Access Network (RAN) and possibly one or more core networks, comprised within the cellular communication network. The wireless device may further be referred to as a mobile telephone, cellular telephone, laptop, Personal Digital Assistant (PDA), tablet computer, just to mention some further examples. The wireless device may be, for example, portable, pocket-storable, hand-held, computer-comprised, or vehicle-mounted mobile device, enabled to communicate voice and/or data, via the RAN, with another entity, such as another wireless device or a server.

The cellular communication network covers a geographical area which is divided into cell areas, wherein each cell area is served by at least one base station, or Base Station (BS), e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. Cells may overlap so that several cells cover the same geographical area. By the base station serving a cell is meant that the radio coverage is provided such that one or more wireless devices located in the geographical area where the radio coverage is provided may be served by the base station. When a wireless device is said to be served in or by a cell this implies that the wireless device is served by the base station providing radio coverage for the cell. One base station may serve one or several cells. Further, each base station may support one or several communication technologies. The base stations communicate over the air interface operating on radio frequencies with the wireless device within range of the base stations.

In some RANs, several base stations may be connected, e.g. by landlines or microwave, to a radio network controller, e.g. a Radio Network Controller (RNC) in Universal Mobile Telecommunication System (UMTS), and/or to each other. The radio network controller, also sometimes termed a Base Station Controller (BSC) e.g. in GSM, may supervise and coordinate various activities of the plural base stations connected thereto. GSM is an abbreviation for Global System for Mobile Communication (originally: Groupe Special Mobile).

In 3rd Generation Partnership Project (3GPP) Long Term Evolution (LTE), base stations, which may be referred to as eNodeBs or eNBs, may be directly connected to other base stations and may be directly connected to one or more core networks.

UMTS is a third generation mobile communication system, which may be referred to as 3rd generation or 3G, and which evolved from the GSM, and provides improved mobile communication services based on Wideband Code Division Multiple Access (WCDMA) access technology. UMTS Terrestrial Radio Access Network (UTRAN) is essentially a radio access network using wideband code division multiple access for wireless devices. High Speed Packet Access (HSPA) is an amalgamation of two mobile telephony protocols, High Speed Downlink Packet Access (HSDPA) and High Speed Uplink Packet Access (HSUPA), defined by 3GPP, that extends and improves the performance of existing 3rd generation mobile telecommunication networks utilizing the WCDMA. Such networks may be named WCDMA/HSPA.

The 3GPP has undertaken to evolve further the UTRAN and GSM based radio access network technologies, for example into evolved UTRAN (E-UTRAN) used in LTE.

The expression downlink (DL) is used for the transmission path from the base station to the wireless device. The expression uplink (UL) is used for the transmission path in the opposite direction i.e. from the wireless device to the base station.

A heterogeneous network (hetnet) is a network with more than one cell type and/or base station type. The difference between the different cell and/or base station types may relate to several different features, but most often there is a difference between the maximum transmit power (i.e. the power amplifiers differ) which also relates to the cell size. A typical hetnet scenario comprises a higher power cell and a lower power cell, which may be referred to as macro cell and pico cell respectively, where the macro cell is typically served by a base station transmitting with higher power than a base station serving the pico cell. A base station or node serving a macro, or higher power, cell, may be named a macro node and may correspond to a conventional base station. A base station or node serving a pico, or lower power cell, may be named a low power node (LPN) and thus a cell provided by such node may be named LPN cell. A LPN may correspond, for example, to a remote radio unit (RRU), pico, or micro base station, allowing expanding the network capacity in a cost-efficient way. Deployment of LPNs is seen as a powerful tool to meet the ever-increasing demand for mobile broadband services.

Deployed LPNs in a heterogeneous network are typically classified as either co-channel, where each LPN has its own cell identity, e.g. scrambling code, or combined cell where pico cells of the LPNs have the same cell identities as a macro cell that the pico cells typically are located within.

The purpose of LPNs and cells provided by such nodes, i.e.LPN cells, such as pico cells, is often to offload macro cells and increase the capacity per area unit. Two examples of use-cases for heterogeneous network deployment that may be envisioned are coverage holes and capacity enhancement for localized traffic hotspots. The downlink power associated with a macro cell is typically much higher than from a LPN cell (e.g. 20W to 2W) and the macro cell will cover a larger area in the downlink compared to the LPN cell. When a downlink connection is equally good from the macro cell and the LPN cell, an LPN uplink connection may be much better, e.g. 20/2 = 10 times better in case of the example of a 20W vs. 2W power difference. In heterogeneous networks there are thus typically locations where a wireless device has the best downlink connection to a macro cell e.g. owing to transmission with higher power in the downlink compared to a LPN cell, but at the same time a better uplink connection to the LPN cell, e.g. due to that the wireless device transmits with same power to both the macro and LPN cell but may be located closer to the LPN cell. This leads to imbalance and there being imbalance zones, or imbalance regions, where a first cell of a first type, e.g. a macro cell, provides the best downlink quality at the same time as a second cell of a second type, e.g. a LPN cell, provides the best uplink quality.

There are certain problems relating to hetnets and imbalance regions of hetnets in particular. For example, UL performance of a wireless device may be negatively affected in a hetnet, such as when the wireless is located in an imbalance region. Consider e.g. a wireless device that is served say in the outskirts of a macro cell and close to a border of a LPN cell. Such wireless device may transmit with relatively high power in the uplink to the macro cell and thereby cause relatively high interference to the closer LPN cell. This has negative impact on the uplink performance in the LPN cell, which e.g. may be identified by studying measurement graphs from interference measurements of neighbouring cells.

R1-142613, "LS on interference management techniques in Hetnet", 3GPP TSG-RAN WG1#77, Seoul, Korea, 19th - 23rd May 2014, discloses "Extended E-HICH in strong imbalance zone". To mitigate strong uplink interference from a wireless device in a macro cell to one or more adjacent LPN cells, an additional E-HICH channel is proposed to be configured for wireless devices in a strong imbalance zone. A certain event may be configured and used to identify if a wireless device has entered an imbalance zone. Based on this a RNC may extend the configuration of E-HICH from a LPN on the identified wireless device. The LPN may decode the uplink data from the wireless device, and HARQ feedback will be sent to the wireless device. Hence the number of retransmissions is reduced for the identified wireless device and the uplink interference is reduced at the LPN due to reduced number of retransmissions. F-DPCH is not transmitted from LPN for the wireless device in question in order to limit excessive power consumption. However, in order to implement this, new signalling needs to be introduced to inform the wireless device to receive the (extended) E-HICH while not receiving the F-DPCH from the non-serving cell.

WO 2014/182236 A1 provides techniques used to ensure reliable reception of essential uplink control information in relevant nodes when the communication link is weak, in scenarios where another uplink link in the active set is stronger and would normally dictate the power control mechanism.

SUMMARY

An object is to provide improvements in heterogeneous wireless communication networks, in particular improvements relating to uplink performance.

According to a first aspect of embodiments herein, the object is achieved by a method, performed by a network node, for managing transmit power of a wireless device. The network node is comprised in a wireless communication network comprising cells for serving the wireless device. The cells form at least one imbalance region in which the wireless device has the best quality in the downlink to a first cell of a first type and in the uplink to a second cell of a different, second type. The network node identifies a situation associated with a risk for undesired increase of transmit power used by the wireless device when the wireless device moves in the imbalance region. The network node then provides, in response to the identification, power control that makes the wireless device increase transmit power slower than else would be the case.

According to a second aspect of embodiments herein, the object is achieved by a computer program comprising instructions that when executed by a processing circuit causes the network node to perform the method according to the first aspect.

According to a third aspect of embodiments herein, the object is achieved by a data carrier comprising the computer program according to the third aspect.

According to a fourth aspect of embodiments herein, the object is achieved by a network node for managing transmit power of a wireless device. The network node is configured to be comprised in a wireless communication network comprising cells for serving the wireless device. The cells form at least one imbalance region in which the wireless device has the best quality in the downlink to a first cell of a first type and in the uplink to a second cell of a different, second type. The network node is configured to identify a situation associated with a risk for undesired increase of transmit power used by the wireless device when the wireless device moves in the imbalance region. Further, the network node is configured to provide, in response to the identification, power control that makes the wireless device increase transmit power slower than else would be the case.

The imbalance region described above is characteristic for what commonly is named a heterogeneous network, or hetnet, and the wireless communication network thus correspond to a hetnet. It has been identified that UL performance in hetnets, such as in the wireless communication network described above, and in particular in the case of UMTS and WCDMA/HSPA, e.g. is negatively affected by undesired, in particular large and quick, changes in transmit power of wireless devices. The changes being prone to occur for wireless devices in imbalance regions. Hence, by, as in embodiments herein, identifying a situation with risk for such increase and in response to the identification make the wireless device increase transmit power slower, both quick and large changes are counteracted and thus undesired changes are counteracted and may even be avoided. As a result UL performance is improved and embodiments herein thus provide improvements in hetnets.

## BRIEF DESCRIPTION OF THE DRAWINGS

Examples of embodiments herein are described in more detail with reference to the appended schematic drawings, which are briefly described in the following.

Figure 1 is a block diagram schematically depicting an example of a wireless communication network in which embodiments herein may be implemented.
Figure 2 schematically illustrates how a soft handover region and an imbalance region may relate to each other.
Figure 3 is a combined signaling diagram and flowchart for describing embodiments herein.
Figures 4a-c schematically illustrates how transmit power can be increased slower by decreasing a power variation range.
Figure 5 is a flow chart schematically illustrating an example of how transmit power may be increased slower.
Figure 6 is a flowchart schematically illustrating embodiments of a method performed in a network node.
Figure 7 is a functional block diagram for illustrating embodiments of the network node.
Figures 8a-c are schematic drawings illustrating embodiments relating to a computer program product and computer program to cause the network node to perform method actions.

## DETAILED DESCRIPTION

As a development towards embodiment herein, the problem indicated in the Background will first be further discussed and some existing terminology and solutions will be briefly mentioned and explained. The terminology and solutions will be referred to in the discussion about the problem and in the description of embodiments herein that follow thereafter. Some details in the following description are in a UMTS and WCDMA/HSPA context and/or have a specific meaning in such context, as will be recognized by the skilled person. However, embodiments herein are not limited to only such context.

It has been identified that UL performance in hetnets, in particular in the case of UMTS and WCDMA/HSPA, e.g. is negatively affected by undesired, in particular large and quick, changes in transmit power of wireless devices, which changes are prone to occur for wireless devices in imbalance regions.

For example, for a wireless device in an imbalance region, served only by a macro cell and not in soft handover (SHO) with any cells of LPN(s), strong UL interference may be generated towards adjacent cells of LPN(s) when the LPN(s) cannot decrease the transmit power of the wireless device via power control. SHO is shortly explained separately below.

Said undesired power increases are thus likely to happen in imbalance regions and are more likely the stronger the imbalance. The undesired increases may in particular occur when a wireless device in an imbalance region has all LPN(s) removed from an active set (AS) as used for SHO, or switches serving cell from a LPN cell to a macro cell and when an Inner Loop Power Control (ILPC) restriction will be adopted when the wireless device is served in the macro cell. ILPC and ILPC restriction are explained separately below.

For instance, in case of normal ILPC (i.e. no ILPC restriction) there may be large and quick transmit power increase of a wireless device when LPN(s) are removed from the AS and no LPN cell is left in the AS, due to consecutive TPC "up" from a macro cell in the AS. In case of ILPC restriction, which typically is applied when the wireless device is in SHO with a serving macro cell and at least one non-serving LPN cell, there may be large and quick transmit power increase of the wireless device when the wireless device is originally served in a LPN cell and switches serving cell to a macro cell (usually the LPN cell will still be in the AS), due to consecutive TPC "up" from both the macro cell and the LPN cell with ILPC restriction.

The undesired power increases leads to interference increase and oscillation, and less load headroom available for data transmission, thereby negatively affecting UL performance.

The object of embodiments herein, i.e. to improve performance in heterogeneous wireless communication networks, may thus more specifically be with regard to improving UL performance by avoiding, or at least reducing, such undesired increases in transmit power as discussed above and that may be caused in and by the above discussed situations.

In case of normal ILPC, the above described power increase problem may to some extent be mitigated by "Extended E-HICH in strong imbalance zone", as described in the Background, when Outer Loop Power Control (OLPC) is activated, since a Dedicated Physical Control Channel (DPCCH) Signal to Interference Ratio (SIR) target then can be lowered. However, there may still be power peaks lasting for quite some time as OLPC is much slower than ILPC. On the other hand, when a wireless device moves towards a LPN, the DPCCH SIR target will be decreased in the area where extended E-HICH is enabled. When the LPN is really added into the AS of the wireless device, the LPN will perform ILPC based on the lowered DPCCH SIR target which will lead to insufficient UL quality. Moreover, "Extended E-HICH" is only applied to WCDMA/HSPA enabled wireless devices that support 3GPP standard TS25.214, release 12, see e.g. version 12.0.0, section 6B, and cannot be used for legacy wireless devices. i.e. such wireless devices that supports only previous releases, and it cannot help the situation where ILPC restriction is adopted.

The concept of so called soft handover (SHO) mentioned above will now be briefly explained. SHO involves establishing some connection in advance between a wireless device and a cell for facilitating an actual handover if/when a handover decision is taken. For example in order to be able to carry out a faster and/or more reliable/seamless handover than otherwise would be the case. For implementation of soft handover, the soft handover may be explicitly or implicitly associated with a region for soft handover. The region for soft handover typically corresponds to a region, or range, of differences in downlink measurements performed by the wireless device on the best cell, typically but not necessarily being a serving cell, and another cell. Within said region or range it is desirable that the wireless device becomes and/or remains at least partly connected to the other cell, for example to facilitate a possible actual handover, i.e. change of the wireless device from being served in the serving cell to instead being served in said other cell. The downlink measurements on the cells are performed on signals, typically reference signals transmitted by respective base station serving the involved cells.

In WCDMA/HSPA, downlink measurements for handover purpose are typically quality measurements on e.g. a Common Pilot Channel (CPICH) of the base station serving the cell that is subject to the downlink measurements.

In addition to the actually best cell according to downlink measurements, a wireless device may add a connection to one or more other cells if their respective downlink measurement is within a certain offset from a downlink measurement on the best cell, e.g. the serving cell. The other cells may be non-serving cells. A so-called active set (AS), or AS list, associated with the wireless device, lists and/or comprises all cells to which the wireless device is connected to, or is at least partly connected to if e.g. fully connected is when the wireless device is connected and actually served in a cell. At least partly connected to a cell may thus refer to that there is some connection established between the wireless device and the cell, which connection is part of and/or facilitate a later actual handover to the cell. This is utilized in soft handover by adding a potentially new serving cell to the active set in advance as a non-serving cell. In WCDMA/HSPA it would typically be the RNC that finally decides if a wireless device shall add a new cell or not to the active set, which typically is accomplished by so called active set update Radio Resource Control (RRC) signalling between the wireless device and the RNC. It is also the RNC 130 that decides if an actual handover shall be carried out.

ILPC as mentioned above will now be briefly discussed and explained. ILPC for WCDMA/HSPA is e.g. disclosed in TS 25.214, v.10.0.0, section 5.1.2.2. The uplink ILPC adjusts transmit power of a wireless device in order to keep the received uplink SIR at a given SIR target that may be named SIR_target. Upon reception of one or more Transmit Power Control (TPC) commands in a TPC command combining period, the wireless device shall derive a single TPC command that may be named TPC_cmd, for each TPC command combining period in which a TPC command is known to be present, i.e. DPCCH is being transmitted.

There are two algorithms, Alg1 and Alg2, for deriving the TPC_cmd:

Alg1 - According to this algorithm the wireless device derives TPC_cmd in each slot, which can take a value of either 1 (increase) or -1 (decrease).

Alg2 - According to this algorithm the wireless device processes the received TPC commands on a 5-slot cycle, and derives one TPC_cmd every such 5-slot cycle. When not in SHO, TPC_cmd equals "1" or "-1" if all 5 hard decisions within a set are "1" or "-1", otherwise it equals "0" (hold). During SHO, first one temporary TPC (TPC_temp) is derived for each radio link set as in a non-SHO case, then the UE derives a combined TPC_cmd. It equals "-1" if any of $TPC\_temp_i$ equals "-1", and it equals "1" if

$$\frac{1}{N}\sum_{i=1}^{N}TPC\_temp_i > 0.5 ,$$

otherwise TPC_cmd is set to "0".

Alg2 makes it possible to emulate smaller step sizes.

ILPC restriction as mentioned above will now be briefly discussed and explained. ILPC restriction for WCDMA/HSPA is e.g. disclosed in R1-142414, "On Control Channel Robustness for Secondary Pilot and ILPC Restriction Schemes", which is a 3GPP contribution. According to ILPC restriction the DPCCH is solely power controlled by the serving cell and the uplink data channel such as Dedicated Physical Data Channel (DPDCH) and enhanced DPDCH (E-DPDCH) are set relative DPCCH, see e.g. TS25.214, release 12, section 5.1.2. Power control according to ILPC restriction is achieved by either having the non-serving cells always issue TPC UP commands, i.e. increase power command, or having the wireless device ignore TPC commands from non-serving cells via a High Speed Shared Control CHannel (HS-SCCH) order. Letting the serving cell control the DPCCH implies that the DPCCH SIR in the non-serving cells will increase significantly. To make use of the increased DPCCH SIR in the non-serving cells, the reference value setting can be set more aggressively.

ILPC restriction may e.g. be adopted when a wireless device is in SHO with cells including a serving macro cell and at least one non-serving LPN cell. It can guarantee UL control robustness towards the serving macro cell. The ILPC restriction scheme also works for legacy wireless devices, i.e. wireless devices supporting release 11 and earlier of the 3GPP standard, see e.g. TS 25.214, release 11, version 11.0.0, section 5.1.2, if it is implemented by sending TPC UP commands from LPN(s).

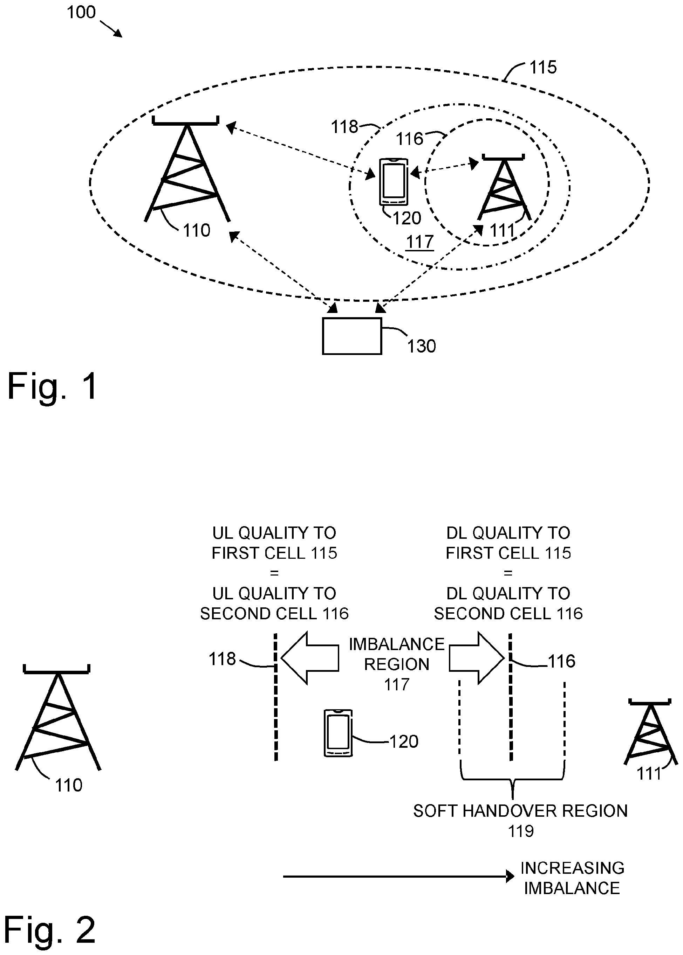

**Figure 1** depicts an example of a **wireless communication network 100**, e.g. a telecommunication network, in which embodiments herein may be implemented. The wireless communication network 100 may be a WCDMA/HSPA network but may be e.g. be any any cellular network or system, such as a, or based on a, UMTS, WCDMA, WCDMA/HSPA, LTE or GSM network, or any 3GPP cellular network.

The wireless communication network 100 comprises cells, e.g. **a first cell 115** and **a second cell 116**, for serving one or more wireless devices, e.g. **a wireless device 120** as shown in the figure. As should be recognized, the wireless device 120 is a device capable to wirelessly communicate in the wireless communication network 100 over one or more radio links, via network nodes of the wireless communication network 100, and with e.g. other communication devices in the same and/or other communication networks. The wireless device 120 may e.g. correspond to a user equipment, a mobile station, a mobile terminal or a wireless terminal, a mobile phone, a computer such as e.g. a laptop, a Personal Digital Assistants (PDAs) or a tablet computer, sometimes referred to as a surf plate, with wireless capability, a so called Machine to Machine (M2M) device or Machine Type of Communication (MTC) device, i.e. devices that are not associated with a conventional user, or any other radio network unit capable to wirelessly communicate over a radio link in the wireless communication network 100.

The first cell 115, or at least radio coverage thereof, may be provided by **a first network node** 110 comprised in the wireless communication network 100 and is typically a radio network node comprised in a Radio Access Network (RAN) part of the wireless communication network 100. More specifically the first network node 110 is typically, as illustrated in the figure, an RBS, for example an NodeB, NB, eNodeB, eNB or any other network node capable of serving a wireless device, such as the wireless device 120, in the wireless communication network 100.

The second cell 115, or at least radio coverage thereof, may be provided by a **second network node 111** comprised in the wireless communication network 100 and is typically a radio network node comprised in the RAN. More specifically the second network node 111 is typically, as illustrated in the figure, an RBS, for example an NodeB, NB, eNodeB, eNB or any other network node capable of serving a wireless device, such as the wireless device 120, in the wireless communication network 100.

Note that typically the first network node 110 and the second network node 111 are different nodes and/or units, logically and/or physically, but that they may be one and the same logical and/or physical node and/or unit, and that thus the first cell 115 and the second cell 116 may be provided by one and the same physical and/or logical network node and/or unit. For example, there may be one base station that provides both the first cell 115 and the second cell 116.

The first network node 110 and/or the second network node 111 may be controlled by **a third network node 130** comprised in the wireless communication network 100. The third network node is typically also a radio network node comprised in the RAN. More specifically the third network node 130 is typically a controlling node, e.g. a RNC.

The first cell 115 is of a first type and the second cell is of a different, second type. The second type may be associated with substantially lower downlink power than the first types. The first type may be a conventional type of cell served with conventional transmit power, e.g. 20 W, by a base station. That is, the first network node 110 may serve the first cell using transmit power that may be considered conventional and the first network node 110 may be a conventional base station. A cell of the first type, e.g. the first cell 115, may be named a macro cell.

The second type may be a low, or lower, power type of cell that served with lower transit power than the first type and thus may be lower transmit power than conventionally, e.g. 2 W. That is, the second cell 116 may be served with lower transmit power than the first cell. Cells of the second type may be named pico cells or LPN cells.

The wireless communication network 100 may be named an heterogeneous wireless communication networks, or hetnet, which may be classified either as co-channel or combined cell.

The first cell 115 and the second cell 116 form, or cause, **an imbalance region 117** in which the wireless device 120 has the best quality in the downlink to the first cell 115 and in the uplink to the second cell 116. The imbalance region 117 may be caused by the above described difference in transmit power for serving the first cell 115 and the second cell 117, but other reasons are also possible. For example, the first network node 110 providing the first cell 115 may comprise an improved, e.g. more advanced, UL receiver while the second network node 111 providing the second cell 116 may comprise a conventional UL receiver, which results in that the wireless device 120 may have better quality in the UL to the first cell 115 owing to the advanced UL receiver while the wireless device may have better quality in DL to the second cell.

The numbered dotted perimeters representing each cell in Figure 1 indicate a respective DL coverage area where the cell in question provides the best downlink quality, i.e. if the wireless device 120 would be located within the perimeter of the DL coverage area of the second cell 116, the second cell 116 would provide the best quality for the downlink. If the wireless device 120 is located outside the perimeter of the DL coverage area of the second cell 116 but still within the perimeter of the DL coverage area of the first cell 115, as exemplified in the figure, the first cell 115 provides the best quality for the downlink. To be able to illustrate the imbalance zone 117 and the difference in downlink and uplink quality, the figure has been furnished also with a perimeter **of an uplink coverage area 118** associated with the second cell 116. When the wireless device 120 is located within the perimeter of the uplink coverage area 118, as shown in the figure, the second cell 116 provides the best quality for the uplink and if outside, the first cell 115 provides the best quality for the uplink. The imbalance region 117 exemplified in the figure is thus between the perimeter of the cell area of the second cell 116 and the perimeter of the uplink coverage area 118.

Note that how the first cell 115 and the second cell 116 in Figure 1 have been drawn in relation to each other, where e.g. the second cell 116 is located within the first cell 115, is just an example. The first cell 115 and the second cell 116 may alternatively e.g. have partly overlapping cell areas and it may even be so that the cell areas defined by downlink quality does not overlap at all but e.g. the uplink coverage area 118 of the second cell 116 partly overlap the cell area of the first cell 115.

Attention is drawn to that Figure 1 is only schematic and for exemplifying purpose and that not everything shown in the figure is required for all embodiments herein, as will be evident to the skilled person based on what is disclosed herein. Also, a wireless communication network that in reality corresponds to the wireless communication network 100 typically comprises several further network nodes, base stations, cells etc., as realized by the skilled person, but which are not shown herein for the sake of simplifying.

**Figure 2** schematically illustrates how a soft handover (SHO) region as mentioned above, here exemplified as an SHO region 119, and the imbalance region 117 may relate to each other. Note that the SHO region 119 is just an example. The SHO region 119 and the imbalance region 117 may exist independent of each other. In general a SHO region associated with a cell may be determined by one or more parameter settings and/or algorithms in the wireless device 120 and/or one or more network nodes associated with the cell, e.g. the SHO region 119 may be determined by parameter settings and/or algorithms in the wireless device 120 and/or in the first network node 111 and/or third network node 130. Note that a SHO region in general need not be centered around the equal DL quality line as shown in the figure. The equal DL quality line e.g. corresponding to the numbered dotted perimeter of the second cell 116 where the second cell 116 and the first cell 115 provide substantially equal downlink quality. However, in general, a SHO region typically at least comprises the equal DL quality line and thus more or less overlap with an imbalance region when such exists between cells. It is realized that the imbalance in an imbalance region, e.g. as illustrated in the figure for the imbalance region 117, is increasing when approaching the equal DL quality line.

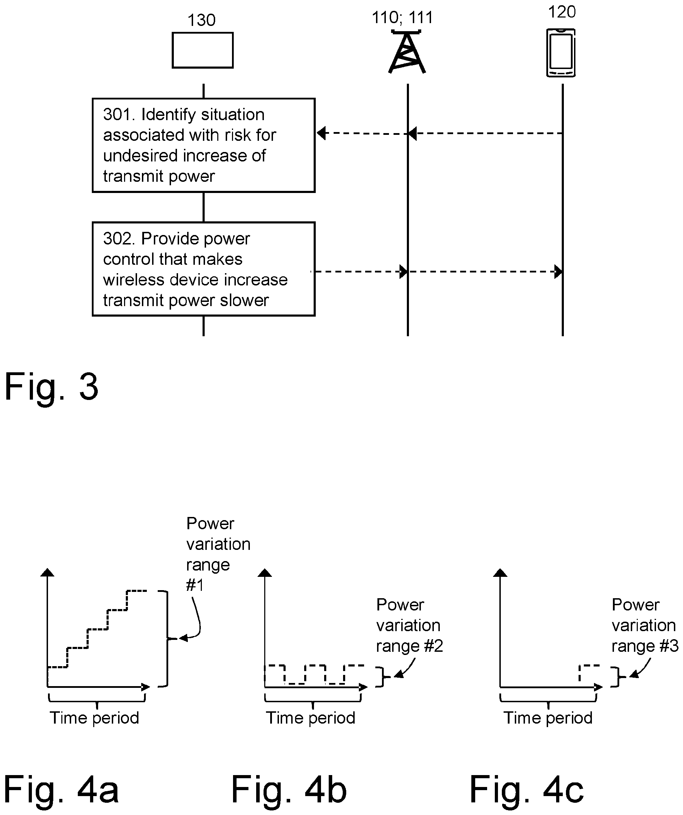

**Figure 3** depicts a combined signaling diagram and flowchart and will be used to discuss examples of embodiments herein relating to a method performed by the third network node 130. Particularly, the examples will relate to UMTS and WCDMA/HSPA where the third network node 130 is a RNC. However, as should be realized by the skilled person, in case the wireless communication network is based on another radio access technology (RAT) where e.g. corresponding functionality as in the RNC is in the base stations, such as in the case of LTE, most if what is described below may instead be performed by another network node or nodes, e.g. the first network node 110 and/or the second network node 111, which in the case of LTE would be eNBs. The following actions may be taken in any suitable order.

**Action 301**

The third network node 130 identifies a situation associated with a risk for undesired increase of transmit power used by the wireless device 120 when the wireless device 120 moves in the imbalance region 117. The identified situation in the present action is used to trigger action 302 below, which relates to making the wireless device 120 increase transmit power slower, e.g. by making ILPC slower.

As should be realized and as illustrated in the figure, the third network node 130, such as in case of a RNC, may base the identification on information received from the first network node 110, the second network node 111 and/or from the wireless device 120. For example, in the case of the third network node 130 being a RNC, the identification is typically based on information from the first network node 110 being a NodeB corresponding to a macro base station and/or from the second network node 111 typically being another NodeB and corresponding to a LPN. The information from the first network node 110 and/or the second network node is in this case in turn based on information from the wireless device 120, e.g. information resulting from measurements performed by the wireless device 120.

In some embodiments, the identified situation comprises a first situation where all cells of the second type, e.g. LPN cells, are removed from an AS of the wireless device 120. Expressed differently, the identified situation indicates that said all cells of the second type are removed from the AS of the wireless device 120. All cells may be one or more cells. In the case of e.g. UMTS and WCDMA/HSPA, the third network node 130 being a RNC may obtain this information internally since AS updates are performed by the RNC.

In some embodiments, the identified situation comprises a second situation where the wireless device 120 switches serving cell from the second cell 116, e.g. being a LPN cell, to the first cell 115, e.g. being a macro cell, and may there adopt ILPC restriction.

In some embodiments, the wireless device 120 has a difference between a measured value of best uplink quality to a cell of the first type, e.g. the first cell 115, and a predetermined value of target uplink quality. In these embodiments, the identified situation may comprise a third situation where said difference is larger than or equal to a threshold value being greater than zero. The slower ILPC and the present action may only need to be performed when this is the case. The measured value of best uplink quality may be a measured DPCCH SIR at the best macro cell. The predetermined value of target uplink quality may be a DPCCH SIR target, such as the DPCCH SIR target used in ILPC and that may have been set, i.e. predetermined, by OLPC. The best macro cell may but need not necessarily be a cell serving the wireless device 120, such as the first cell 115. The threshold value may be predefined and/or predetermined, and may be named thr_sir1. A typical threshold value may be in the range of 5-8 dB, but higher threshold values may e.g. be used at situations of lower load and/or with an uplink receiver more tolerable to interference change.

In the case of UMTS and WCDMA/HSPA and the third network node 130 being a RNC, the RNC is involved in cell switch decisions and updating the AS, and thus has direct access to information for identifying the situation, e.g. according to any of the above described embodiments.

The first, second and/or third situations described may each or in combination, when applicable, be considered as an indicator of said risk for undesired increase of transmit power, and identification thereof may thus trigger the next action.

## Action 302

The third network node 130 provides, in response to the identification in Action 301 above, power control that makes the wireless device 120 increase transmit power slower than else would be the case, e.g. by making ILPC slower, i.e. making ILPC increase power slower.

As should be realized and as illustrated in the figure, the third network node 130, such as in case of a RNC, may accomplish the provision of the power control by sending information to the first network node 110, and/or the second network node 111 that in response to this may perform the power control with the wireless device 120 via ILPC.

The power control may be provided by decreasing a power variation range associated with how much TPC commands being sent to the wireless device 120 over a certain time period are able to increase transmit power of the wireless device 120.

In a first alternative that may be used when the wireless device 120 does not apply a TPC discard functionality, such as described separately below, the power variation range is decreased by making the wireless device 120 switch from a first to a second control algorithm for the uplink power control. The second control algorithm may be associated with a decreased power variation range compared to the first control algorithm. For example, the switch may be from the algorithm Alg1 to the algorithm Alg2 described above for ILPC. Alg2 may be adopted with effective power control step that may be 1/5 compared to Alg1. A higher layer signaling may be needed to inform the wireless device 120 to switch the ILPC algorithm.

In a second alternative that may be used when the wireless device 120 does not apply a TPC discard functionality such as described below, the power variation range is decreased by sending an odd integer number M, where M>1, of TPC commands to the wireless device 120. Out of every M TPCs, where M is an odd configurable number, send (M-1)/2 TPCs with "+1", i.e. TPC increase, and another (M-1)/2 TPCs with "-1", i.e. TPC decrease. The remained one TPC may be set according to ordinary ILPC operation. This may provide an effective power control step of 1/M, where M may be a configurable parameter that may be based on how much decrease of the power variation range is desirable, and/or that may be predetermined and/or predefined.

In a third alternative that may be used when the wireless device 120 does apply a TPC discard functionality such as described below, the power variation range is decreased by sending an integer number, "N" (N>1), of TPC commands to the wireless device 120. At least one and up to a number of N-1 TPC commands are on hold, e.g. are not sent at all, or are sent with insufficient power so they will be discarded by the wireless device 120. For example, out of every N TPC commands, one TPC command may be sent with normal and/or sufficient power so that the wireless device 120 is able to reliably decode this TPC, and then omit actual sending of the other TPC command(s), or send them with zero power or so low power that they will be discarded and ignored by the wireless device 120. In this way the effective power control step decreases to e.g. 1/N, where N may be a configurable parameter that may be based on how much decrease of power variation range is desirable, and/or that may be predetermined and/or predefined.

Note that enumerative naming as used herein, such as the first, second and third alternatives mentioned above, does not, as such, imply relation to any other enumerative naming, such as the first, second and third situation discussed previously.

The TPC discard functionality mentioned above may e.g. be such as disclosed in Niclas Wiberg, Hu Rong, Fredrik Gunnarsson, Bengt Lindoff, "Combining of Power Control Commands During Soft Handover in WCDMA", PIMRC2003. An idea with this TPC discard functionality is to take the radio link quality into account when deriving TPC commands. More specifically a wireless device, e.g. the wireless device 120, is made to discard received TPC commands with too poor quality. The quality criteria may for example be TPC error probability or the SIR of a Fractional Dedicated Physical Channel (F-DPCH) which carries UL TPC (e.g. F-DPCH which carries UL TPC). This can be used to avoid that unreliable TPC bits are processed and misunderstood by the wireless device 120 and leading to degraded UL performance.

Whether the wireless device 120 implements or applies the TPC discard functionality can be determined based on information about the wireless deie 120, and may be determined in various ways. For example, the wireless device 120 may report its capability to the third network node 130 regarding whether it has TPC discard functionality or not.

Since OLPC may increase a SIR target and thereby transmit power of the wireless device 120, OLPC should not be used, e.g. temporarily deactivated or "frozen", when the wireless device 120 is made to increase transmit power slower according to the present action, i.e. slower ILPC is activated.

The slower increase of transmit power, e.g. slower ILPC, resulting from execution of Action 302 may of course be disabled when it no longer serves no purpose, e.g. when the difference between a measured DPCCH SIR at the best macro cell, and the DPCCH SIR target is smaller than a predefined and/or predetermined threshold that may be named thr_sir3. This threshold may be and typically is a different threshold than the threshold mentioned under Action 301. The best macro cell may but need not necessarily be a cell serving the wireless device 120, e.g. the first cell 115.

The triggering of Action 302, i.e. providing the power control, in response to Action 301, that makes the wireless device 120 increase transmit power slower, may be proactive or reactive.

In proactive triggering, the provision of the power control that makes the wireless device 120 increase transmit power slower, e.g. by slower ILPC, may be accomplished before the AS is actually updated, e.g. updated so all cells of the second type are removed, or before the actual serving cell switch, for instance, when the AS update or the switch is triggered but has not yet been executed. There is a delay between the triggering and the actual execution, which enable the third network node 130, e.g. RNC, to start the slower increase upon the triggering of the AS update or cell switch. See e.g., 3GPP TS 25.331, "Radio Resource Control (RRC); Protocol specification", chapter 8.3.4, v.10.1.0. For example, the third network node 130 may start ILPC restriction when switching of serving cell to the first cell 115, e.g. macro cell, is triggered and at the same time it may provide the slower increase of the transmit power. In another example, ILPC restriction may be adopted when the removing of the second cell 116, e.g. LPN cell, from the AS is triggered and no cell of the second type would be left in the AS. The LPN that will be removed may send TPC "+1", i.e. TPC increase, or simply turn off F-DPCH transmission if the wireless device 120 is determined to have TPC discard capability, and at approximately the same time the slower increase of the transmit power may be provided, e.g. by slower ILPC from the first cell 115.

In reactive triggering, which is more straightforward, the provision of the power control that makes the wireless device 120 increase transmit power slower may be provided in response to the actual AS update or the serving cell switch.

Hence, embodiments herein enable to avoid or mitigate the undesired increases of transmit power of wireless devices in heterogeneous wireless communication networks, so called hetnets, in particularly in imbalance scenarios and for wireless devices that are located in imbalance regions. Thereby interference increase and oscillation can be reduced and more load headroom available for data transmission, resulting in improved UL performance and hence improved performance in hetnets. A further advantage is that embodiments herein may be implemented in a way transparent to the wireless devices, i.e. may be implemented without the need of update already existing, so called legacy, wireless devices.

Figures 4a-c schematically illustrates how, as discussed above under Action 302, transmit power can be increased slower by decreasing a power variation range. The power variation range being associated with how much TPC commands being sent to the wireless device 120 over a certain time period are able to increase transmit power of the wireless device 120.

Figure 4a illustrates TPC commands received by the wireless device 120 and that cause, or are part of causing, an undesired increase, such as a too fast and too large increase, of transmit power of the wireless device 120. That is, such increase to be mitigated by embodiments herein. In the shown example, during a time period of 5 time slots for sending and receiving TPC commands, 5 TPC increase commands are sent to and received by the wireless device 120 and results in a power variation range #1.

Figure 4b illustrates TPC commands received by the wireless device 120 where out of an odd number M=5, a number of (M-1)/2, i.e. 2 TPC increase commands and a number of (M-1)/2, i.e. 2 TPC decrease command are sent to and received by the wireless device 120 during a time period of M, i.e. 5, time slots. During the same time period also one TPC increase command is sent to and received by the wireless device 120. Said one command may be sent to the wirelesses device 120 as it would be sent without execution of Actions 301-302, e.g. if there is no identification as described under Action 301 and may thus for example be sent conventionally according to conventional ILPC. If Figure 4a is assumed to represents what would be sent to and received by the wireless device 120 without execution of Actions 301-302, said one TPC command would thus be a TPC increase as shown in the figure and resulting in a power variation range #2. As a result, and by comparing with Figure 4a, it can be seen that the wireless device 120 has been made to increases transmit power slower than else would be the case over the shown time period . Figure 4b may be realized to illustrate an example of the second alternative discussed above under Action 302 for decreasing the power variation range.

Figure 4c illustrates TPC commands received by the wireless device 120 where out of a number N=5, a number of N-1=4 TPC commands have not been received, or at least not been considered by the wireless device, e.g. as a result from that the wireless device 120 applies such TPC discard functionality as discussed above. That is, the 4 non-received or non-considered TPC commands may have been not sent to the wireless device 120 at all or have been sent with such insufficient power that they have been not received or not been considered, e.g. been discarded, by the wireless device 120. However, a remaining one of the N TPC commands have been sent with sufficient power to enable it to be received and not be discarded by the wireless device 120. Said one command may be a TPC command as would be sent to the wireless device 120 without execution of Actions 301-302, e.g. if there is no identification as described under Action 301 and may thus for example be conventionally sent according to conventional ILPC. If Figure 4a is assumed to represents what would be sent to and received by the wireless device 120 without execution of Actions 301-302, said one TPC command would thus be a TPC increase command as shown in the figure shown in the figure and resulting in a power variation range #3. As a result, and by comparing with Figure 4a, it can be seen that the wireless device 120 has been made to increases transmit power slower than else would be the case over the shown time period. Figure 4c may be realized to illustrate an example of the third alternative discussed above under Action 302 for decreasing the power variation range.

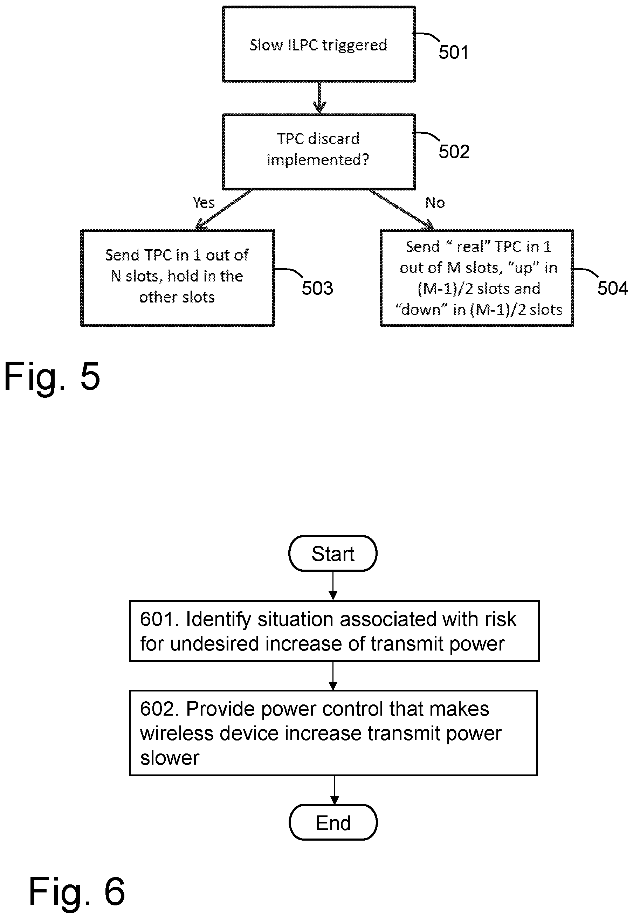

**Figure 5** is a flow chart schematically illustrating an example of how Action 302 above may be carried out. In **an action 501** slow ILPC is triggered which may be proactively or reactively as described above. Then, in **an action 502** it is checked whether a TPC discard functionality, as discussed above, is implemented. If the TPC discard functionality is implemented, then in **an action 503,** the wireless device 120 is made to receive one TPC increase command, e.g. generated according to conventional ILPC, out of integer number N of TPC command that may be sent to it during N possible time slots, which increase commend is sent with sufficient power to enable it not to be discarded by the TPC discard functionality of the wireless device 120. The rest of N-1 TPC commands are held, i.e. are not sent or are sent with insufficient power so they will be discarded by the wireless device 120 implementing the TPC discard functionality. This makes the wireless device 120 increase power according to one TPC increase command during a time period corresponding to the N time slots instead of potentially a number N of TPC increase commands. Action 503 is thus an example of the third alternative discussed above under Action 302 for decreasing the power variation range and as illustrated by example in Figure 4c.

If the TPC discard functionality is not implemented, then in **an action 504,** the wireless device 120 is made to receive one TPC increase command generated according to conventional ILPC, out of odd integer number M of TPC commands that may be sent during M time slots. Further, a number of (M-1)/2 TPC commands manually set to "increase" and a number of (M-1)/2 TPC command that may be manually, i.e. outside conventional ILPC, set to "decrease" are sent during the M time slots. This makes the wireless device 120 increase power according to one TPC increase command during a time period corresponding to the M time slots instead of potentially a number M of TPC increase commands. Action 504 is thus an example of the second alternative discussed above under Action 302 for decreasing the power variation range and as illustrated by example in Figure 4b.

The above discussed slower increase of transmit power, e.g. by said slower ILPC, may cause insufficient UL quality at the first cell 115, e.g. macro cell, when all cells of the second type, e.g. LPN(s), are removed from the AS. An improvement to this may be to still keep the one cell of the second type, e.g. the second cell 116 or the best cell of the second type for a while, e.g. during a predetermined and/or predefined period, to receive and decode the UL transmission of the wireless device 120, but without sending any feedback. At the same time maximum allowed Hybrid Automatic Repeat Request (HARQ) transmission attempts may be decreased to e.g. the smallest number, or minimum, of target HARQ transmission attempts+1 and a normal maximum allowed HARQ transmission attempts. This may ensure a correct reception in the third network node 130, e.g. RNC, after selectively combining data packets during SHO, while it to some extent may decrease the number of required transmission attempts.

It may also be possible to use the "Extended E-HICH", as described in the Background, if the wireless device 120 supports this. The second cell that was kept in the AS, e.g. the best LPN, may stop the reception and normal maximum HARQ transmission attempts may be adopted when e.g. the difference in the measured DPCCH SIR between the kept second cell and the first cell 115 and/or the best macro cell is smaller than a predefined and/or predetermined threshold that may be named thr_sir2. This threshold may be and typically is a different threshold than the thresholds mentioned above under Action 301 and Action 302. The best macro cell may but need not necessarily be a cell serving the wireless device 120, e.g. the first cell 115.

Figure 6 is a flow chart schematically illustrating embodiments of a method, performed by the third network node 130, for managing transmit power of the wireless device 120. As mentioned above, the network node 130 is comprised in the wireless communication network 100 comprising cells, such as the first cell 115 and the second cell 116, for serving the wireless device 120. Said cells form at least one imbalance region, such as the imbalance region 117, in which the wireless device 120 has the best quality in the downlink to the first cell 115 of the first type and in the uplink to the second cell 116 of the different, second type. As also mentioned above, the method may in some embodiments, e.g. when the wireless communication network 100 is based on LTE, instead be performed by the first network node 110 and/or the second network node 111. The method comprises the actions of:

### Action 601

The third network node 130 identifies a situation associated with a risk for undesired increase of transmit power used by the wireless device 120 when the wireless device 120 moves in the imbalance region.

In some embodiments, the identified situation comprises that all cells of the second type are removed from an active set list associated with one or more cells that the wireless device 120 is at least partly connected to.

Further, in some embodiments, the identified situation comprises that the wireless device 120 switches serving cell from the second cell 116 to the first cell 115. The identification may be further based on that a restriction is associated with the uplink power control when the wireless device 120 become served by the first cell 115. The restriction comprises that one or more uplink channels are solely controlled by the first cell 115 as serving cell. When the wireless device 120 is served by the first cell 115 it may at least partly be connected to one or more cells of the second type, such as the second cell 116.

Moreover, in some embodiments, the identified situation comprises that the the wireless device 120 has a difference between a measured value of best uplink quality to a cell 115 of the first type and a predetermined value of target uplink quality, which difference is larger than or equal to predefined threshold value being greater than zero.

This action may fully or partly correspond to action 301 discussed above.

### Action 602

The third network node 130 provides, in response to the identification, power control that makes the wireless device 120 increase transmit power slower than else would be the case.

In some embodiments, the provision in response to the identification is made proactively before an actual removal of said all cells of the second type from the active set list, as discussed above under Action 601, or before an actual switch of serving cell from said second cell 116 to said first cell 115, as also discussed above under Action 601.

In some embodiments, the power control is provided by decreasing a power variation range associated with how much transmit power control (TPC) commands being sent to the wireless device 120 over a certain time period are able to increase transmit power of the wireless device 120.

In a first group of embodiments, the power variation range is decreased by making the wireless device 120 switch from a first to a second control algorithm for the uplink power control. The second control algorithm being associated with a decreased power variation range compared to the first control algorithm.

In a second group of embodiments, the power variation range is decreased by sending an odd integer number, which may be named M, of TPC commands to the wireless device 120. Of the odd integer number M a

$$\frac{M-1}{2}$$

number of $\quad$ TPC commands increases power by

$$\frac{M-1}{2}$$

a predetermined value, and a number of $\quad$ TPC commands decreases power by the predetermined value.

In a third group of embodiments, the power variation range is decreased by sending an integer number, which may be named N, of TPC commands to the wireless device 120. Of the integer number N, at least one and up to a number of N-1 TPC commands are not sent or are sent with insufficient power so they will be discarded by the wireless device 120. A remaining one or more TPC commands are then sent with sufficient power to enable them not to be discarded by the wireless device 120. The power variation range may be decreased according to this group of embodiments in response to detection that the wireless device 120 applies a discard functionality of received TPC commands. The discard functionality being based on whether a quality criteria associated with the received TPC commands is fulfilled or not.

This action may fully or partly correspond to action 302 discussed above.

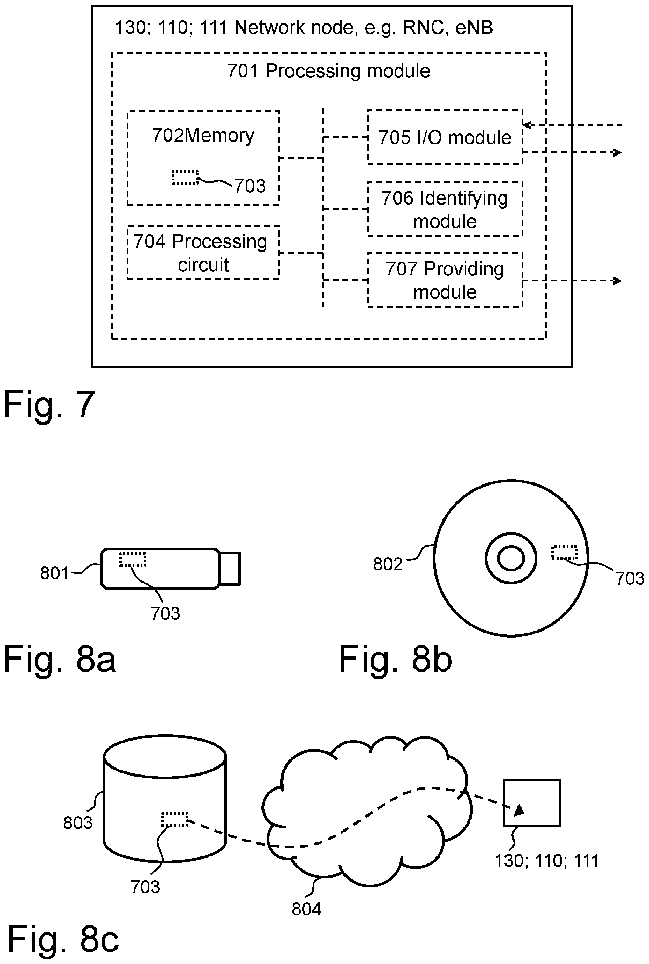

**Figure 7** is a schematic block diagram for illustrating embodiments of the third network node 130 for managing transmit power of the wireless device 120, in particular how the third network node 130 may be configured to perform the method and actions discussed above in connection with Figure 6. Embodiments of the first network node 110 and/or the second network node 111 may be correspondingly configured to perform the method and actions when they are performed by the first network node 110 and/or the second network node 111, such as in the case of a LTE based wireless communication network 100.

The third network node 130 may comprise **a processing module 701**, such as a means, one or more hardware modules, including e.g. one or more processors, and/or one or more software modules for performing said methods and/or actions.

The third network node 130 may further comprise **a memory 702** that may comprise, such as contain or store, **a computer program 703**. The computer program comprises 'instructions' or 'code' directly or indirectly executable by the third network node 130 so that it performs the said methods and/or actions. The memory 702 may comprise one or more memory units and may be further be arranged to store data, such as configurations and/or applications involved in or for performing functions and actions of embodiments herein.

Moreover, the third network node 130 may comprise **a processing circuit 704** as an exemplifying hardware module and may comprise or correspond to one or more processors. In some embodiments, the processing module 701 may comprise, e.g. 'is embodied in the form of' or 'realized by' the processing circuit 704. In these embodiments, the memory 702 may comprise the computer program 703 executable by the processing circuit 704, whereby the third network node 130 is operative, or configured, to perform said method and/or actions.

Typically the third network node 130, e.g. the processing module 701, comprises **an Input/Output (I/O) module 705**, configured to be involved in, e.g. by performing, any communication to and/or from other units and/or nodes, such as sending and/or receiving information to and/or from other external nodes or devices. The I/O module 705 may be exemplified by an obtaining, e.g. receiving, module and/or a sending module, when applicable.

In further embodiments, the third network node 130, e.g. the processing module 701, may comprise one or more of **a identifying module 706** and **a providing module 707** as exemplifying hardware and/or software module(s). In some embodiments, the identifying module 706 and/or the providing module 707 may be fully or partly implemented by the processing circuit 704.

Therefore, according to the various embodiments described above, the third network node 130, and/or the processing module 701 and/or the identifying module 706 are operative, or configured, to identify said situation associated with a risk for undesired increase of transmit power used by the wireless device 120 when the wireless device 120 moves in the imbalance region 117.

Moreover, according to the various embodiments described above, the third network node 130, and/or the processing module 701 and/or the providing module 707 are operative, or configured, to provide, in response to the identification, said power control that makes the wireless device 120 increase transmit power slower than else would be the case.

**Figures 8a-c** are schematic drawings illustrating embodiments relating to a computer program that may be the computer program 703 and that comprises instructions that when executed by the processing circuit 704 and/or the processing module 701, causes the first network node 110, the second network node 111 and/or the third network node 130 to perform as described above.

In some embodiments there is provided a data carrier, e.g. a computer program product, comprising the computer program 703. The data carrier may be one of an electronic signal, an optical signal, a radio signal, and a computer readable medium. The computer program 703 may thus be stored on the computer readable medium. By data carrier may be excluded a transitory, propagating signal and the data carrier may correspondingly be named non-transitory data carrier. Non-limiting examples of the data carrier being a computer-readable medium is a memory card or **a memory stick 801** as in Figure 8a, **a disc storage medium 802** such as a CD or DVD as in Figure 8b, **a mass storage device 803** as in Figure 8c. The mass storage device 803 is typically based on hard drive(s) or Solid State Drive(s) (SSD). The mass storage device 803 may be such that is used for storing data accessible over **a computer network 805,** e.g. the Internet or a Local Area Network (LAN).

The computer program 703 may furthermore be provided as a pure computer program or comprised in a file or files. The file or files may be stored on the computer-readable medium and e.g. available through download e.g. over the computer network 805, such as from the mass storage device 803 via a server. The server may e.g. be a web or File Transfer Protocol (FTP) server. The file or files may e.g. be executable files for direct or indirect download to and execution on the first network node 110, the second network node 111 and/or the third network node 130, e.g. by the processing circuit 704. They may also or alternatively be for intermediate download and compilation involving the same or another processor to make them executable before further download and execution causing the first network node 110, the second network node 111 and/or the third network node 130 to perform the method as described above.

Note that any processing module(s) mentioned in the foregoing may be implemented as a software and/or hardware module, e.g. in existing hardware and/or as an Application Specific integrated Circuit (ASIC), a Field-Programmable Gate Array (FPGA) or the like. Also note that any hardware module(s) and/or circuit(s) mentioned in the foregoing may e.g. be included in a single ASIC or FPGA, or be distributed among several separate hardware components, whether individually packaged or assembled into a System-on-a-Chip (SoC).

Those skilled in the art will also appreciate that the modules and circuitry discussed herein may refer to a combination of hardware modules, software modules, analog and digital circuits, and/or one or more processors configured with software and/or firmware, e.g. stored in memory, that, when executed by the one or more processors make the radio network node 110 and/or wireless device 121 to be configured to and/or to perform the above-described methods, respectively.

The term "network node" as used herein may as such refer to any type of radio network node (described below) or any network node, which may communicate with at least a radio network node. Examples of such network nodes include any radio network node stated above, a core network node (e.g. MSC, MME, etc.), Operations & Maintenance (O&M), Operations Support Systems (OSS), Self Organizing Network (SON) node, positioning node (e.g. E-SMLC), MDT etc.

The term "radio network node" may refer to any type of network node serving a wireless device, e.g. UE, and/or that are connected to other network node(s) or network element(s) or any radio node from which a wireless device receives signals. Examples of radio network nodes are Node B, base station (BS), multi-standard radio (MSR) radio node such as MSR BS, eNodeB, network controller, radio network controller (RNC), base station controller (BSC), relay, donor node controlling relay, base transceiver station (BTS), access point (AP), transmission points, transmission nodes, RRU, RRH, nodes in distributed antenna system (DAS) etc.

The term "node" as used herein may be used for the sake of simplicity, in order to denote a node which may be a network node, a radio network node or a wireless device, as applicable.

Note that although terminology used herein may be particularly associated with and/or exemplified by certain cellular communication systems, wireless communication networks etc., depending on terminology used, such as wireless communication networks based on 3GPP, this should not be seen as limiting the scope of the embodiments herein to only such certain systems, networks etc.

As used herein, the term "memory" may refer to a hard disk, a magnetic storage medium, a portable computer diskette or disc, flash memory, random access memory (RAM) or the like. Furthermore, the memory may be an internal register memory of a processor.

Also note that enumerating terminology such as first network node, second network node, first wireless device, second wireless device, etc., as such should be considering non-limiting and the terminology as such does not imply a certain hierarchical relation. Without any explicit information in the contrary, naming by enumeration should be considered merely a way of accomplishing different names.

As used herein, the expression "configured to" may mean that a processing circuit is configured to, or adapted to, by means of software or hardware configuration, perform one or more of the actions described herein.

As used herein, the terms "number", "value" may be any kind of digit, such as binary, real, imaginary or rational number or the like. Moreover, "number", "value" may be one or more characters, such as a letter or a string of letters. Also, "number", "value" may be represented by a bit string.

As used herein, the expression "in some embodiments" has been used to indicate that the features of the embodiment described may be combined with any other embodiment disclosed herein.

As used herein, the expression "transmit" and "send" are typically interchangeable. These expressions may include transmission by broadcasting, uni-casting, group-casting and the like. In this context, a transmission by broadcasting may be received and decoded by any authorized device within range. In case of uni-casting, one specifically addressed device may receive and encode the transmission. In case of group-casting, e.g. multi-casting, a group of specifically addressed devices may receive and decode the transmission.

When using the word "comprise" or "comprising" it shall be interpreted as non-limiting, i.e. meaning "consist at least of".

The embodiments herein are not limited to the above described preferred embodiments. Various alternatives, modifications and equivalents may be used. Therefore, the above embodiments should not be taken as limiting the scope of the present disclosure, which is defined by the appending claims.

**Claims**

1. A method, performed by a network node (130; 110; 111), for managing transmit power of a wireless device (120), the network node (130; 110; 111) being comprised in a wireless communication network (100) comprising cells (115, 116) for serving the wireless device (120), said cells forming at least one imbalance region (117) in which the wireless device (120) has the best quality in the downlink to a first cell (115) of a first type and in the uplink to a second cell (116) of a different, second type, wherein the method comprises:

   - identifying (301; 601) a situation associated with a risk for undesired increase of transmit power used by the wireless device (120) when the wireless device (120) moves in the imbalance region (117), and
   - providing (302; 602), in response to the identified situation, power control that makes the wireless device (120) increase transmit power slower than else would be the case, wherein said power control is provided by decreasing a power variation range associated with how much transmit power control, "TPC", commands being sent to the wireless device (120) over a certain time period are able to increase transmit power of the wireless device (120).

2. The method as claimed in claim 1, wherein the identified situation comprises that all cells of the second type are removed from an active set list associated with one or more cells that the wireless device (120) is at least partly connected to.

3. The method as claimed in claim 1, wherein the identified situation comprises that the wireless device (120) switches serving cell from the second cell (116) to the first cell (115).

4. The method as claimed in claim 3, wherein the identification (301; 601) is further based on that a restriction is associated with the uplink power control when the wireless device (120) become served by the first cell (115), which restriction comprises that one or more uplink channels are solely controlled by the first cell (115) as serving cell.

5. The method as claimed in any one of claims 3-4, wherein the wireless device (120) when served by the first cell (115) is at least partly connected to one or more cells (116) of the second type.

6. The method as claimed in any one of claim 2-5, wherein the provision (302; 602) in response to the identified situation is made proactively before an actual removal of said all cells of the second type from the active set list, or before an actual switch of serving cell from said second cell (116) to said first cell (115).

7. The method as claimed in any one of claim 1-6, wherein the identified situation comprises that the wireless device (120) has a difference between a measured value of best uplink quality to a cell (115) of the first type and a predetermined value of target uplink quality, which difference is larger than or equal to a threshold value being greater than zero.

8. The method as claimed in claim 1, wherein the power variation range is decreased by making the wireless device (120) switch from a first to a second control algorithm for the uplink power control, which second control algorithm is associated with a decreased power variation range compared to the first control algorithm.

9. The method as claimed in claim 1, wherein the power variation range is decreased by sending an odd integer number, "M", of TPC commands to the wireless device (120), of which odd integer number M a

$$\frac{M-1}{2}$$

number of TPC commands increases power by a predetermined value and a number of

$$\frac{M-1}{2}$$

TPC commands decreases power by the predetermined value.

10. The method as claimed in claim 1, wherein the power variation range is decreased by sending an integer number, "N", of TPC commands to the wireless device (120), of which integer number N at least one and up to a number of N-1 TPC commands are not sent or are sent with insufficient power so they will be discarded by the wireless device (120) and a remaining one or more TPC commands are sent with sufficient power to enable them not to be discarded by the wireless device (120).

11. The method as claimed in claim 10, wherein the power variation range is decreased in response to detection that the wireless device (120) applies a discard functionality of received TPC commands, which discard functionality is based on whether a quality criteria associated with the received TPC commands is fulfilled or not.

12. A computer program (703) comprising instructions that when executed by a processing circuit (704) cause the network node (130; 110; 111) to perform the method according to any one of claims 1-11.

13. A data carrier (801-803) comprising the computer program (703) according to claim 12.

14. A network node (130; 110; 111) for managing transmit power of a wireless device (120), wherein the network node (130) is configured to be comprised in a wireless communication network (100) comprising cells (115, 116) for serving the wireless device (120), said cells forming at least one imbalance region (117) in which the wireless device (120) has the best quality in the downlink to a first cell (115) of a first type and in the uplink to a second cell (116) of a different, second type, wherein the network node (130; 110; 111) is configured to execute a method in any one of claims 1 to 11.

**Patentansprüche**

1. Verfahren, das von einem Netzknoten (130; 110; 111) durchgeführt wird, zum Verwalten der Sendeleistung einer drahtlosen Vorrichtung (120), wobei der Netzknoten (130; 110; 111) in einem drahtlosen Kommunikationsnetz (100) enthalten ist, das Zellen (115, 116) zum Bedienen der drahtlosen Vorrichtung (120) umfasst, wobei die Zellen mindestens einen Asymmetriebereich (117) bilden, in dem die drahtlose Vorrichtung (120) die beste Qualität im Downlink zu einer ersten Zelle (115) eines ersten Typs und im Uplink zu einer zweiten Zelle (116) eines anderen, zweiten Typs aufweist, wobei das Verfahren umfasst:

- Identifizieren (301; 601) einer Situation, die mit einem Risiko für eine unerwünschte Erhöhung von von der drahtlosen Vorrichtung (120) verwendeter Sendeleistung verbunden ist, wenn sich die drahtlose Vorrichtung (120) in dem Asymmetriebereich (117) bewegt, und
- Bereitstellen (302; 602), als Reaktion auf die identifizierte Situation, einer Leistungssteuerung, die dazu führt, dass die drahtlose Vorrichtung (120) die Sendeleistung langsamer erhöht, als dies sonst der Fall wäre, wobei die Leistungssteuerung durch Verringern eines Leistungsänderungsbereichs bereitgestellt wird, der dem Ausmaß zugeordnet ist, in dem Sendeleistungssteuerungsbefehle, "TPC"-Befehle, die über einen bestimmten Zeitraum an die drahtlose Vorrichtung (120) gesendet werden, die Sendeleistung der drahtlosen Vorrichtung (120) erhöhen können.

2. Verfahren nach Anspruch 1, wobei die identifizierte Situation umfasst, dass alle Zellen des zweiten Typs aus einer Liste aktiver Sätze entfernt werden, die einer oder mehreren Zellen zugeordnet ist, mit denen die drahtlose Vorrichtung (120) mindestens teilweise verbunden ist.

3. Verfahren nach Anspruch 1, wobei die identifizierte Situation umfasst, dass die drahtlose Vorrichtung (120) die bedienende Zelle von der zweiten Zelle (116) zu der ersten Zelle (115) umschaltet.

4. Verfahren nach Anspruch 3, wobei die Identifizierung (301; 601) ferner darauf basiert, dass der Uplink-Leistungssteuerung eine Einschränkung zugeordnet ist, wenn die drahtlose Vorrichtung (120) von der ersten Zelle (115) bedient wird, wobei die Einschränkung umfasst, dass ein oder mehrere Uplink-Kanäle ausschließlich von der ersten Zelle (115) als bedienende Zelle gesteuert werden.

5. Verfahren nach einem der Ansprüche 3 bis 4, wobei die drahtlose Vorrichtung (120), wenn sie von der ersten Zelle (115) bedient wird, mindestens teilweise mit einer oder mehreren Zellen (116) des zweiten Typs verbunden ist.

6. Verfahren nach einem der Ansprüche 2 bis 5, wobei die Bereitstellung (302; 602) als Reaktion auf die identifizierte Situation proaktiv vor einer tatsächlichen Entfernung aller Zellen des zweiten Typs aus der Liste aktiver Sätze oder vor einer tatsächlichen Umschaltung der bedienenden Zelle von der zweiten Zelle (116) zu der ersten Zelle (115) erfolgt.

7. Verfahren nach einem der Ansprüche 1 bis 6, wobei die identifizierte Situation umfasst, dass die drahtlose Vorrichtung (120) eine Differenz zwischen einem gemessenen Wert der besten Uplink-Qualität zu einer Zelle (115) des ersten Typs und einem vorgegebenen Wert der Soll-Uplink-Qualität aufweist, wobei die Differenz größer oder gleich einem Schwellenwert ist, der größer als null ist.

8. Verfahren nach Anspruch 1, wobei der Leistungsänderungsbereich verringert wird, indem die drahtlose Vorrichtung (120) veranlasst wird, von einem ersten auf einen zweiten Steueralgorithmus für die Uplink-Leistungssteuerung umzuschalten, wobei der zweite Steueralgorithmus einem verringerten Leistungsänderungsbereich im Vergleich zu dem ersten Steueralgorithmus zugeordnet ist.

9. Verfahren nach Anspruch 1, wobei der Leistungsänderungsbereich verringert wird, indem eine ungerade Ganzzahl, "M", von TPC-Befehlen an die drahtlose Vorrichtung (120) gesendet wird, wobei von dieser ungeraden Ganzzahl M eine Anzahl von

$$\frac{M-1}{2}$$

TPC-Befehlen die Leistung um einen vorgegebenen Wert erhöht und eine Anzahl von

$$\frac{M-1}{2}$$

TPC-Befehlen die Leistung um den vorgegebenen Wert verringert.

10. Verfahren nach Anspruch 1, wobei der Leistungsänderungsbereich verringert wird, indem eine Ganzzahl, "N", von TPC-Befehlen an die drahtlose Vorrichtung (120) gesendet wird, wobei von dieser Ganzzahl N mindestens ein und bis zu einer Anzahl von N-1 TPC-Befehlen nicht gesendet werden oder mit unzureichender Leistung gesendet werden, so dass sie von der drahtlosen Vorrichtung (120) verworfen werden und ein verbleibender oder mehrere TPC-Befehle mit einer Leistung gesendet werden, die ausreicht, damit sie von der drahtlosen Vorrichtung (120) nicht verworfen werden.

**11.** Verfahren nach Anspruch 10, wobei der Leistungsänderungsbereich als Reaktion auf eine Erkennung, dass die drahtlose Vorrichtung (120) eine Verwerfungsfunktionalität empfangener TPC-Befehle anwendet, verringert wird, wobei die Verwerfungsfunktionalität darauf basiert, ob ein den empfangenen TPC-Befehlen zugeordnetes Qualitätskriterium erfüllt ist oder nicht.

**12.** Computerprogrammprodukt (703), umfassend Anweisungen, die bei Ausführung durch eine Verarbeitungsschaltung (704) den Netzknoten (130; 110; 111) veranlassen, das Verfahren nach einem der Ansprüche 1 bis 11 durchzuführen.

**13.** Datenträger (801 bis 803), umfassend das Computerprogramm (703) nach Anspruch 12.

**14.** Netzknoten (130; 110; 111) zum Verwalten der Sendeleistung einer drahtlosen Vorrichtung (120), wobei der Netzknoten (130) dazu konfiguriert ist, in einem drahtlosen Kommunikationsnetz (100) enthalten zu sein, das Zellen (115, 116) zum Bedienen der drahtlosen Vorrichtung (120) umfasst, wobei die Zellen mindestens einen Asymmetriebereich (117) bilden, in dem die drahtlose Vorrichtung (120) die beste Qualität im Downlink zu einer ersten Zelle (115) eines ersten Typs und im Uplink zu einer zweiten Zelle (116) eines anderen, zweiten Typs aufweist, wobei der Netzknoten (130; 110; 111) dazu konfiguriert ist, ein Verfahren nach einem der Ansprüche 1 bis 11 auszuführen.

**Revendications**

**1.** Procédé, mis en œuvre par un nœud de réseau (130 ; 110 ; 111), pour gérer une puissance de transmission d'un dispositif sans fil (120), le nœud de réseau (130 ; 110 ; 111) étant compris dans un réseau de communication sans fil (100) comprenant des cellules (115, 116) pour desservir le dispositif sans fil (120), lesdites cellules formant au moins une région de déséquilibre (117) dans laquelle le dispositif sans fil (120) a la meilleure qualité dans la liaison descendante vers une première cellule (115) d'un premier type et dans la liaison montante vers une deuxième cellule (116) d'un deuxième type différent, dans lequel le procédé comprend :

- l'identification (301 ; 601) d'une situation associée à un risque d'augmentation non souhaitable de puissance de transmission utilisée par le dispositif sans fil (120) lorsque le dispositif sans fil (120) se déplace dans la région de déséquilibre (117), et
- la fourniture (302 ; 602), en réponse à la situation identifiée, d'une commande de puissance qui amène le dispositif sans fil (120) à augmenter la puissance de transmission plus lentement que ce qui serait sinon le cas, dans lequel ladite commande de puissance est fournie en diminuant une plage de variation de puissance associée à un nombre d'instructions de commande de puissance de transmission, « TPC », étant envoyées au dispositif sans fil (120) sur une certaine période de temps qui est capable d'augmenter la puissance de transmission du dispositif sans fil (120).

**2.** Procédé selon la revendication 1, dans lequel la situation identifiée comprend le fait que toutes les cellules du deuxième type sont retirées d'une liste d'ensembles actifs associée à une ou plusieurs cellules auxquelles le dispositif sans fil (120) est au moins partiellement connecté.

**3.** Procédé selon la revendication 1, dans lequel la situation identifiée comprend le fait que le dispositif sans fil (120) commute la cellule de desserte de la deuxième cellule (116) à la première cellule (115).

**4.** Procédé selon la revendication 3, dans lequel l'identification (301 ; 601) est en outre basée sur le fait qu'une restriction est associée à la commande de puissance de liaison montante lorsque le dispositif sans fil (120) devient desservi par la première cellule (115), laquelle restriction comprend le fait qu'un ou plusieurs canaux de liaison montante sont seulement commandés par la première cellule (115) en tant que cellule de desserte.

**5.** Procédé selon l'une quelconque des revendications 3 ou 4, dans lequel le dispositif sans fil (120) lorsqu'il est desservi par la première cellule (115) est au moins partiellement connecté à une ou plusieurs cellules (116) du deuxième type.

**6.** Procédé selon l'une quelconque parmi la revendication 2 à 5, dans lequel la fourniture (302 ; 602) en réponse à la situation identifiée est faite de façon proactive avant un retrait effectif de toutes lesdites cellules du deuxième type de la liste d'ensembles actifs, ou avant une commutation effective de cellule de desserte de ladite deuxième cellule (116) vers ladite première cellule (115).

**7.** Procédé selon l'une quelconque parmi la revendication 1 à 6, dans lequel la situation identifiée comprend le fait que le dispositif sans fil (120) présente une différence entre une valeur mesurée de meilleure qualité de liaison montante vers une cellule (115) du premier type et une valeur prédéterminée de qualité de liaison montante cible, laquelle différence est supérieure ou égale à une valeur seuil étant supérieure à zéro.

**8.** Procédé selon la revendication 1, dans lequel la plage de variation de puissance est diminuée en amenant le dispositif sans fil (120) à commuter d'un premier à un deuxième algorithme de commande pour la commande de puissance de liaison montante, lequel deuxième algorithme de commande est associé à une plage de variation de puissance diminuée par comparaison avec le premier algorithme de commande.

**9.** Procédé selon la revendication 1, dans lequel la plage de variation de puissance est diminuée en envoyant un nombre entier impair, « M », d'instructions TPC au dispositif sans fil (120), nombre entier impair M duquel un nombre de

$$\frac{M-1}{2}$$

instructions TPC augmente la puissance d'une valeur prédéterminée et un nombre de

$$\frac{M-1}{2}$$

instructions TPC diminue la puissance de la valeur prédéterminée.

**10.** Procédé selon la revendication 1, dans lequel la plage de variation de puissance est diminuée en envoyant un nombre entier, « N », d'instructions TPC au dispositif sans fil (120), nombre entier N duquel au moins une et jusqu'à un nombre de N-1 instructions TPC ne sont pas envoyées ou sont envoyées avec une puissance insuffisante de sorte qu'elles seront mises à l'écart par le dispositif sans fil (120) et une ou plusieurs instructions TPC restantes sont envoyées avec une puissance suffisante pour leur permettre de ne pas être mises à l'écart par le dispositif sans fil (120).

**11.** Procédé selon la revendication 10, dans lequel la plage de variation de puissance est diminuée en réponse à la détection que le dispositif sans fil (120) applique une fonctionnalité de mise à l'écart des instructions TPC reçues, laquelle fonctionnalité de mise à l'écart est basée sur le fait qu'un critère de qualité associé aux instructions TPC reçues est rempli ou non.

**12.** Programme informatique (703) comprenant des instructions qui lorsqu'elles sont exécutées par un circuit de traitement (704) amènent le nœud de réseau (130 ; 110 ; 111) à mettre en œuvre le procédé selon l'une quelconque des revendications 1 à 11.

**13.** Porteuse de données (801-803) comprenant le programme informatique (703) selon la revendication 12.

**14.** Nœud de réseau (130 ; 110 ; 111) pour la gestion d'une puissance de transmission d'un dispositif sans fil (120), dans lequel le nœud de réseau (130) est configuré pour être compris dans un réseau de communication sans fil (100) comprenant des cellules (115, 116) pour desservir le dispositif sans fil (120), lesdites cellules formant au moins une région de déséquilibre (117) dans laquelle le dispositif sans fil (120) a la meilleure qualité dans la liaison descendante vers une première cellule (115) d'un premier type et dans la liaison montante vers une deuxième cellule (116) d'un deuxième type différent, dans lequel le nœud de réseau (130 ; 110 ; 111) est configuré pour exécuter un procédé selon l'une quelconque des revendications 1 à 11.

100

115

118

116

110

120

117

111

130

# Fig. 1

UL QUALITY TO
FIRST CELL 115
=
UL QUALITY TO
SECOND CELL 116

DL QUALITY TO
FIRST CELL 115
=
DL QUALITY TO
SECOND CELL 116

118

IMBALANCE
REGION
117

116

110

120

111

SOFT HANDOVER REGION
119

INCREASING
IMBALANCE

# Fig. 2

130

110; 111

120

301. Identify situation associated with risk for undesired increase of transmit power

302. Provide power control that makes wireless device increase transmit power slower

# Fig. 3

Power variation range #1

Time period

# Fig. 4a

Power variation range #2

Time period

# Fig. 4b

Power variation range #3

Time period

# Fig. 4c

```
┌─────────────────────────┐
│   Slow ILPC triggered   │ ⌐ 501
└─────────────────────────┘
            │
            ▼
┌─────────────────────────┐
│      TPC discard        │ ⌐ 502
│     implemented?        │
└─────────────────────────┘
    Yes │         │ No
        ▼         ▼
```

| Send TPC in 1 out of N slots, hold in the other slots | ⌐ 503 |

| Send " real" TPC in 1 out of M slots, "up" in (M-1)/2 slots and "down" in (M-1)/2 slots | ⌐ 504 |

# Fig. 5

```
            ( Start )
                │
                ▼
```

601. Identify situation associated with risk for undesired increase of transmit power

602. Provide power control that makes wireless device increase transmit power slower

```
                │
                ▼
            ( End )
```

# Fig. 6

130; 110; 111 Network node, e.g. RNC, eNB

701 Processing module

702 Memory

703

704 Processing circuit

705 I/O module

706 Identifying module

707 Providing module

# Fig. 7

801

703

# Fig. 8a

802

703

# Fig. 8b

803

703

804

130; 110; 111

# Fig. 8c

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2014182236 A1

**Non-patent literature cited in the description**

• LS on interference management techniques in Hetnet. *3GPP TSG-RAN WG1#77,* 19 May 2014

• **NICLAS WIBERG ; HU RONG ; FREDRIK GUNNARSSON ; BENGT LINDOFF.** Combining of Power Control Commands During Soft Handover in WCDMA. *PIMRC2003,* 2003